# EUROPEAN PATENT SPECIFICATION

(11) **EP 4 575 518 B1**
(45) Date of publication and mention of the grant of the patent: **11.11.2026**
(21) Application number: 24221206.6
(22) Date of filing: 18.12.2024
(51) Int. Cl.: G01P 21/02, B64F 5/60, G01P 5/165, G01P 13/02, G05B 23/02, B64D 43/02

(54) **PERFORMANCE-BASED AIR DATA REASONER WITH DISSIMILAR SENSORS**
LEISTUNGSBASIERTER LUFTDATENSCHLUSSFOLGERUNGSSYSTEM MIT UNGLEICHEN SENSOREN
RAISONNEUR DE DONNÉES D'AIR BASÉ SUR LA PERFORMANCE AVEC CAPTEURS DISSEMBLABLES

(30) Priority: 20.12.2023 US 202318390945
(43) Date of publication of application: 25.06.2025
(73) Proprietor: ROSEMOUNT AEROSPACE INC., Burnsville, MN 55306-4898 (US)
(72) Inventor: SLY, Jaime A., Savage (US); KUNIK, William G., Eagan (US)
(74) Representative: Dehns

(56) References cited:
- US-A1- 2022 411 094
- US-B1- 11 465 734
- IMAI SHIGERU ET AL: "Airplane flight safety using error-tolerant data stream processing", IEEE AEROSPACE AND ELECTRONIC SYSTEMS MAGAZINE, IEEE SERVICE CENTER, PISCATAWAY, NJ, US, vol. 32, no. 4, 1 April 2017 (2017-04-01), pages 4 - 17, XP011651891, ISSN: 0885-8985, [retrieved on 20170601], DOI: 10.1109/MAES.2017.150242

## Description

### TECHNICAL FIELD

The present invention relates generally to aircraft sensor systems, and more particularly, to air data reasoner systems and methods for evaluating aircraft sensor data.

### BACKGROUND

Aircraft sensors often have a level of redundancy, wherein multiple aircraft sensors are measuring the same parameters. The redundancy can occur due to multiple similar sensors of a same type being mounted on an aircraft, or due to dissimilar sensors being mounted on the aircraft that each measure a same parameter. The redundant sources provide valuable data for the aircraft pilot, co-pilot, and any other consuming systems to evaluate. The amount of data and/or the organization of the data, however, can prove cumbersome, and can hence create confusion, possibly resulting in erroneous or less trustworthy sources being selected for use by, e.g., a pilot. Thus, a system for providing trusted sources of data to the data consumers is desirable.

US 11465734 B1 discloses a system for distributed flight controllers for an electric aircraft, including a plurality of flight components coupled to the electric aircraft, and a first controller coupled to an electric aircraft. The first controller is configured to receive a plurality of measured aircraft data and generate a controller allocation datum as a function of the plurality of measured aircraft data. The system further includes a plurality of second controllers, wherein each second controller is configured to receive the controller allocation datum from the first controller, generate an allocation command as a function of the controller allocation datum, and provide the allocation command to each flight component of the plurality of flight components.

IMAI SHIGERU ET AL: "Airplane flight safety using error-tolerant data stream processing", IEEE AEROSPACE AND ELECTRONIC SYSTEMS MAGAZINE, vol. 32, no. 4, 1 April 2017 (2017-04-01), pages 4-17; discloses the use of error detection and data estimation based on error signatures for fault tolerance in flight systems.

US 2022/411094 A1 discloses methods and systems for depicting avionics data anomalies in an aircraft. Time series data is received from the avionics data source, a future time is predicted when a first anomaly threshold will be crossed based on the time series data, and the future time when the first anomaly threshold will be crossed is depicted on a display device associated with the aircraft.

### SUMMARY

An air data reasoner system for evaluating aircraft sensor data obtained from a plurality of aircraft sensors on an aircraft includes a communication device operably connectable to the plurality of aircraft sensors. The system further includes a processor operably connected to the communication device. The system further includes repository of a plurality of performance models operably connected to the processor. The system further includes computer-readable memory operably connected to the processor, the computer-readable memory encoded with instructions that, when executed by the processor, cause the system to perform the following steps. The system receives aircraft parameter values for various aircraft parameters from the plurality of aircraft sensors via the communication device. The system selects applicable performance models for the aircraft parameter values, wherein the applicable performance models are selected from the repository of the plurality of performance models. The system executes the applicable performance models to generate a plurality of accuracy values corresponding to each of the aircraft parameter values. The system determines the most accurate parameter values and corresponding source aircraft sensor for each of the various aircraft parameters. The system compiles a list of available redundant source aircraft sensors for each of the aircraft parameters. The system outputs the most accurate parameter values, the corresponding source aircraft sensors, and the list of available redundant source aircraft sensors to one or more consuming systems via the communication device.

The system of the preceding paragraph can optionally include, additionally and/or alternatively, any one or more of the following features, configurations and/or additional components:
A further embodiment of the foregoing system, wherein the computer-readable memory may be further encoded with instructions that, when executed by the one or more processors, cause the system to perform the following steps. The system generates a threshold table, the threshold table containing threshold operating values for each of the aircraft parameter values based upon the corresponding source aircraft sensor. The system outputs the threshold table to the one or more consuming systems via the communication device.

A further embodiment of any of the foregoing systems, wherein the list of available redundant source aircraft sensors for each of the aircraft parameters is sorted according to the accuracy values of each of the aircraft parameter values.

A further embodiment of any of the foregoing systems, wherein one or more of the applicable performance models for the aircraft sensor data may provide an accuracy value based, in part, upon a flight condition of the aircraft.

A further embodiment of any of the foregoing systems, wherein one or more of the applicable performance models for the aircraft sensor data may provide an accuracy value based, in part, upon an installation location of the source aircraft sensor.

A further embodiment of any of the foregoing systems, wherein one or more of the applicable performance models for the aircraft sensor data may provide an accuracy value based in part upon atmospheric inputs.

A further embodiment of any of the foregoing systems, wherein the atmospheric inputs may include icing conditions.

A further embodiment of any of the foregoing systems, wherein the icing conditions may include a liquid water content quantity and an ice water content quantity.

A further embodiment of any of the foregoing systems, wherein the computer-readable memory may be further encoded with instructions that, when executed by the one or more processors, cause the system to receive fault diagnostics data from the plurality of aircraft sensors via the communication device, the fault diagnostics data indicative of a sensor status.

A further embodiment of any of the foregoing systems, wherein one or more of the applicable performance models for the aircraft sensor data may provide an accuracy value based, in part, upon fault diagnostics data of the source aircraft sensor.

A further embodiment of any of the foregoing systems, wherein one or more of the applicable performance models for the aircraft sensor data may provide an accuracy value based, in part, upon sensor specific performance characteristics

A further embodiment of any of the foregoing systems, wherein the plurality of aircraft sensors may comprise an angle-of-attack vane, a total pressure probe, a synthetic air data sensor, a laser air data sensor, an acoustic air data sensor, and a multifunction probe.

A further embodiment of any of the foregoing systems, wherein the aircraft may include a multi-lane architecture comprising a plurality of aircraft channels, the air data reasoner system includes one or more additional air data reasoners corresponding to each of the plurality of aircraft channels, and the air data reasoner system and the one or more additional air data reasoners corresponding to each of the plurality of aircraft channels are communicatively isolated.

A further embodiment of any of the foregoing systems, wherein the air data reasoner system may be housed within an integrated modular avionics unit.

A further embodiment of any of the foregoing systems, wherein the air data reasoner system may be housed within a flight controls system.

A further embodiment of any of the foregoing systems, wherein the plurality of performance models may be generated by applying a neural network or a standard computational model to flight simulation data, flight test data, or a combination of flight simulation data and flight test data.

A further embodiment of any of the foregoing systems, wherein the aircraft parameters may comprise angle of attack, angle of sideslip, true airspeed, calibrated airspeed, Mach number, static air temperature, total air temperature, and pressure altitude.

A further embodiment of any of the foregoing systems, wherein the plurality of aircraft sensors may comprise synthetic air data sources, pneumatic air data sources, laser air data sources, and acoustic air data sources.

A method for evaluating aircraft sensor data obtained from a plurality of aircraft sensors on an aircraft via an air data reasoner includes receiving aircraft parameter values for various aircraft parameters from the plurality of aircraft sensors via a communication device. The method further includes selecting applicable performance models for the aircraft parameter values, wherein the applicable performance models are selected from a repository of a plurality of performance models. The method further includes executing the applicable performance models to generate a plurality of accuracy values corresponding to each of the aircraft parameter values. The method further includes determining the most accurate parameter value and corresponding source aircraft sensor for each of the various aircraft parameters. The method further includes compiling a list of available redundant source aircraft sensors for each of the aircraft parameters. The method further includes outputting the most accurate aircraft parameter values, the corresponding source aircraft sensors, and the list of available redundant source aircraft sensors to one or more consuming systems via the communication device.

The method may comprise generating a threshold table, the threshold table containing threshold operating values for each of the aircraft parameter values based upon the corresponding source aircraft sensor. The method may further include outputting the threshold table to the one or more consuming systems via the communication device.

### BRIEF DESCRIPTION OF THE DRAWINGS

FIG. 1 is a schematic block diagram of a system for using an air data reasoner to evaluate dissimilar sensors.
FIG. 2 is a schematic block diagram of aircraft sensors connected to the air data reasoner.
FIG. 3 is a sample of performance models contained within the air data reasoner.
FIG. 4 is a dual lane embodiment of a system for using an air data reasoner to evaluate dissimilar sources.
FIG. 5 is a flowchart depicting an example method for evaluating aircraft sensor data obtained from the aircraft sensors via the air data reasoner.

### DETAILED DESCRIPTION

The techniques of this disclosure utilize an air data reasoner within an aircraft air data system. The air data reasoner is configured to receive air data parameter values from various aircraft sensors (or sources) on an aircraft. The various air data sources can include synthetic sources, dissimilar sources, pneumatic sources, or any other type of aircraft sensors configured to measure and/or calculate aircraft parameter values. The air data reasoner is further configured to apply performance models to the air data parameter values. The performance models can be implemented, in some examples, by any data structure containing sensor performance information considering factors such as a current flight condition, environmental conditions, sensor placement, sensor specific performance, or other factors. The air data reasoner is further configured to determine the most accurate and/or reliable air data parameter values given the current factors and the corresponding source sensor, thereby increasing overall system accuracy and reliability. The air data reasoner generates redundancy tables containing a ranked list of redundant source aircraft sensors and their parameter values for each air data parameter. The air data reasoner can also produce a cross-sensor monitoring threshold table containing threshold operating values for each of the aircraft parameter values based upon the corresponding source aircraft sensor in order to standardize operating thresholds across consuming systems.

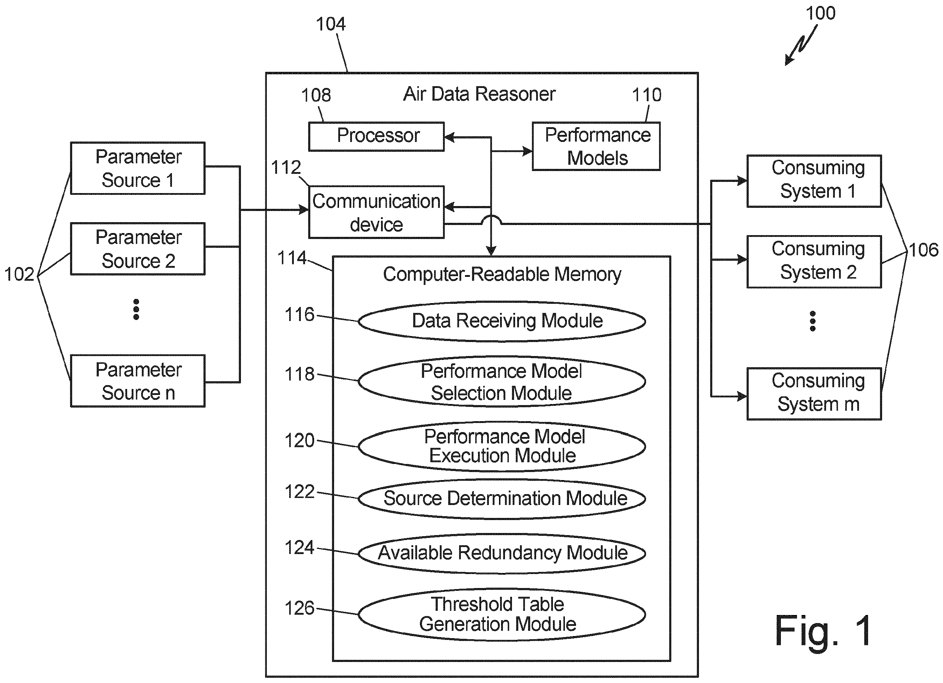

FIG. 1 is a diagram of system 100 for using an air data reasoner to evaluate dissimilar sensors. System 100 includes input parameter sources 102, air data reasoner 104, and consuming systems 106. Air data reasoner 104 includes processor 108, performance model repository 110, communication device 112, and computer-readable memory 114. Computer-readable memory 114 includes data receiving module 116, performance model selection module 118, performance model execution module 120, source determination module 122, available redundancy module 124, and threshold table generation module 126.

Processor 108, in some examples, is configured to implement functionality and/or process instructions for execution within system 100. For instance, processor 108 can be capable of processing instructions stored in computer-readable memory 114. Examples of processor 108 can include any one or more of a microprocessor, a controller, a digital signal processor (DSP), an application specific integrated circuit (ASIC), a field-programmable gate array (FPGA), or other equivalent discrete or integrated logic circuitry.

Computer-readable memory 114, in some examples, is described as computer-readable storage media. In some examples, a computer-readable storage medium includes a non-transitory medium. The term "non-transitory" indicates that the storage medium is not embodied in a carrier wave or a propagated signal. In certain examples, a non-transitory storage medium stores data that, over time, changes (e.g., in RAM or cache). In some examples, computer-readable memory 114 is a temporary memory, meaning that a primary purpose of computer-readable memory 114 is not long-term storage. Computer-readable memory 114, in some examples, is described as volatile memory, meaning that computer-readable memory 114 does not maintain stored contents when electrical power to computer-readable memory 114 is removed. Examples of volatile memories can include random access memories (RAM), dynamic random access memories (DRAM), static random access memories (SRAM), and other forms of volatile memories. In some examples, computer-readable memory 114 is used to store program instructions for execution by processor 108. Computer-readable memory 114, in one example, is used by software or applications to temporarily store information during program execution.

Computer-readable memory 114, in some examples, also includes one or more computer-readable storage media. Computer-readable memory 114 is configured to store larger amounts of information than volatile memory. Computer-readable memory 114 is further configured for long-term storage of information. In some examples, computer-readable memory 114 includes non-volatile storage elements. Examples of such non-volatile storage elements include, but are not limited to, magnetic hard discs, optical discs, flash memories, or forms of electrically programmable memories (EPROM) or electrically erasable and programmable (EEPROM) memories.

Processor 108, performance module repository 110, communication device 112, and computer-readable memory 114 are interconnected within air data reasoner 104. Communication device 112 is operably connected to input parameter sources 102. Communication device 112 is also operably connected to consuming systems 106. Air data reasoner 104 can be housed within an integrated modular avionics unit, within a flight controls system, or within any other area with suitable computing power within the aircraft.

In operation, computer-readable memory 114 is encoded with instructions that are executed by processor 108. Computer-readable memory 114 includes data receiving module 116. Data receiving module 116 includes one or more programs containing instructions to receive data from input parameter sources 102 at air data reasoner 104. Upon execution of data receiving module 116, data (i.e., transmitted from parameter sources 102) is received and processed at air data reasoner 104 via communication device 112. Parameter sources 102 can include various aircraft sensors and data collection sources including, but not limited to, an angle-of-attack vane, a total pressure probe, a synthetic air data sensor system, a laser air data sensor, an acoustic air data sensor, and/or a multifunction probe. Parameter sources 102 can also include multiple aircraft sensors of the same type. Thus, for example, parameter sources 102 can include multiple multifunction probes mounted on the exterior of an aircraft. Data collected from parameter sources 102 can include any measured and/or calculated aircraft parameter values, fault diagnostics, predictive health data, and/or environmental data. Measured and/or calculated aircraft parameter values can include, but are not limited to, angle of attack, angle of sideslip, total pressure, static pressure, true airspeed, calibrated airspeed, Mach number, static air temperature, total air temperature, and pressure altitude.

Data receiving module 116 can be executed manually or at automated intervals. In one embodiment, air data reasoner 104 executes data receiving module 116 on a timed basis, wherein data transmitted from parameter sources 102 to air data reasoner 104 via communication device 112 and is collected or otherwise sampled on a predetermined sampling interval by air data reasoner 104 via execution of data receiving module 116.

As illustrated in FIG. 1, computer-readable memory 114 further includes performance model selection module 118. Performance model selection module 118 includes one or more programs containing instructions to select a performance module from performance model repository 110 based upon the incoming data from input parameter sources 102. Performance model repository 110 can be contained within computer memory, such as, for example, computer-readable memory 114, or in any additional or alternative computer memory structure. Upon execution of performance model selection module 118, processor 108 analyzes the incoming data from input parameter sources 102 to determine the parameter being measured or calculated (e.g., angle of attack, angle of sideslip, total pressure, static pressure, true airspeed, calibrated airspeed, Mach number, static air temperature, total air temperature, and pressure altitude) and the corresponding source aircraft sensor from which the parameter value was transmitted (e.g., an angle-of-attack vane, a total pressure probe, a synthetic air data sensor, a laser air data sensor, an acoustic air data sensor, and/or a multifunction probe). Processor 108, executing performance model execution module 120, then selects one or more appropriate performance model(s) from performance model repository 110 based upon the parameter being measured and/or calculated and based upon the source aircraft sensor.

Performance models contained within performance model repository 110 can be implemented via any data structure containing information related to performance of aircraft sensors. In certain examples, the performance models can be implemented as physics-based dynamic models that represent performance characteristics of the particular sensor. In such examples, air data reasoner 104 (or other computerized device) can execute the physics-based dynamic performance models to identify relevant characteristics of the sensor given the current environmental or flight condition. In other examples, the performance models can be implemented as tables or other data structure that discretizes performance data related to the sensor across various domain parameters, such as altitude, airspeed, Mach number, angle of attack, angle of sideslip, temperature, or other domain parameters. In general, the performance models can be implemented as physics-based dynamic models and/or any data structure (e.g., tables, database structures, linked lists, graphs, charts, histograms, or other data structure) that is capable of storing the relevant information in an organized manner for later retrieval (and, in some examples, interpolation and/or extrapolation between data points).

In some embodiments, the performance models contain data relating to sensor performance based upon the flight envelope, or based more specifically on flight conditions, including factors such as flight level (i.e., altitude), airspeed, angle of attack, and total air temperature. In some embodiments, the performance models are generated by applying a neural network or a standard computational model to flight simulation data, flight test data, or a combination of flight simulation data and flight test data. The performance models can indicate the expected accuracy for a parameter and corresponding source sensor based upon the flight envelope and current flight conditions.

In some embodiments, the performance models contain data relating to sensor performance based upon sensor technology specific performance. The data related to sensor performance can include fault diagnostics or predictive health data. Fault diagnostics and predictive health data can include, for example, probe heater status and/or probe blockage determinations, in examples where the sensor is, e.g., a pitot-static probe. Thus, the performance models can indicate the expected accuracy for a parameter and corresponding source sensor based upon the sensor technology specific performance.

In some embodiments, the performance models contain data relating to sensor performance based upon environmental conditions. Environmental conditions can include data relating to various environmental conditions in which the sensor operates, such as temperature, icing conditions data (e.g., wherein the icing conditions data includes a liquid water content and an ice water content), or other environmental conditions. Thus, the performance models can indicate the expected accuracy for a parameter and corresponding source sensor based upon the environmental conditions. Any combination of the afore-mentioned performance model data can be included within performance model repository 110.

Computer-readable memory 114 includes performance model execution module 120. Performance model execution module 120 includes one or more programs containing instructions to execute one or more performance module(s) from performance model repository 110 based upon the selection made by execution of performance model selection module 118. Upon execution of performance model execution module 120, processor 108 executes the selected performance model(s) for a given parameter and source aircraft sensor, and returns an accuracy indicator. The accuracy indicator is an indication of an expected accuracy for a measured and/or calculated parameter value based upon the factors considered by the performance model(s). Thus, for example, one or more performance models can predict the performance of a source aircraft sensor for a particular parameter given the current flight conditions, environmental conditions, and the sensor Installation location, and output a corresponding accuracy indicator. The accuracy indicator indicates an expected accuracy of the measured and/or calculated parameter value based on the afore-mentioned conditions.

Computer-readable memory 114 includes source determination module 122. Source determination module 122 includes one or more programs containing instructions for processor 108 to evaluate the most accurate or otherwise reliable source for each aircraft parameter based upon the returned accuracy and/or reliability indicators from execution of performance model execution module 120. Upon execution of source determination module 122, processor 108 analyzes the returned accuracy and/or reliability indicators, and determines which aircraft source sensor has the most accurate or reliable calculated and/or measured parameter value for each parameter. In some examples, a list of each parameter, the most accurate or reliable measured and/or calculated parameter value, and the corresponding source sensor is returned. Thus, in such an embodiment, the most accurate or reliable source sensor (e.g., an angle-of-attack vane, a total pressure probe, a synthetic air data sensor, a laser air data sensor, an acoustic air data sensor, a multifunction probe, or other sensor) is determined for each parameter (e.g., angle of attack, angle of sideslip, total pressure, static pressure, true airspeed, calibrated airspeed, Mach number, static air temperature, total air temperature, pressure altitude, or other flight parameter) based upon the corresponding accuracy and/or reliability indicator.

Computer-readable memory 114 includes available redundancy module 124. Available redundancy module 124 includes one or more programs containing instructions for processor 108 to compile a list of available redundant sources for each of the aircraft parameters. Upon execution of available redundancy module 124, processor 108 analyzes the returned accuracy or reliability indicators and determines remaining redundant sources for each parameter. A list of each parameter, the redundant source sensors, and the corresponding measured and/or calculated parameter values can be returned, in some examples.

In some embodiments, a source aircraft sensor is considered a redundant source if the returned accuracy or reliability indicator demonstrates that the parameter value measured and/or calculated by the corresponding source aircraft sensor is less accurate or reliable than the most accurate or reliable source, but still within an acceptable threshold of error such that the value is not discarded. Thus, some source aircraft sensors that measure and/or calculate a parameter value may be discarded if the error of such a measured and/or calculated value is outside of an acceptable threshold of error. Additionally, if some source aircraft sensors indicate a sensor fault, the parameter value from such a source aircraft sensor can be discarded. In such cases, the source aircraft sensor would not be included in the list of available redundant sources for the particular parameter.

Computer-readable memory 114 includes threshold table generation module 126. Threshold table generation module 126 includes one or more programs containing instructions for processor 108 to generate a table containing threshold values for each parameter and corresponding source sensor. In some embodiments, the threshold values for each parameter and corresponding source sensor can be based on the operational range of the parameter and source sensor combination. In other embodiments, the threshold values for each parameter and corresponding source sensor can be based on a narrower range within the operational range of the parameter and source sensor combination. In some embodiments, the threshold values for each parameter and corresponding source sensor can be specific to the current flight conditions and environmental conditions. Thus, the threshold values are determined based on the operational range of the source sensor for the current flight conditions based upon the performance models. For example, a performance model curve can indicate that at a given altitude and Mach number, a source sensor (e.g. a multifunction probe) measuring a particular parameter (e.g., total air speed) must be within a certain operational range. Thus, the threshold table can indicate the operational range based upon the performance model curve, and indicate that any values outside of that operational range are likely erroneous.

The outputs generated by air data reasoner 104 by the execution of the instructions contained within computer readable memory 114 include, in some examples: the most accurate or reliable measured and/or calculated parameter value and corresponding source sensor for each parameter, a list of redundant source sensors and corresponding measured and/or calculated parameter values, and a table containing threshold values for each parameter and corresponding source sensor. The outputs generated by air data reasoner 104 are transmitted to consuming system 106 by operation of communication device 112.

System 100 provides various advantages. Air data reasoner 104 determines the most accurate source of data for a given parameter, thereby reducing the need for pilots or consuming systems to select a source when multiple sources are measuring the same parameter. By using performance models, air data reasoner 104 is able to actively select the most trusted source of data for the current flight conditions and the current environmental conditions, while taking into account the installation location and sensor specific fault diagnostics. Thus, air data reasoner 104 is able to leverage the advantages of source aircraft sensors which may perform better in certain conditions (e.g., icing conditions and flight conditions), while avoiding data that is more likely to be erroneous from source aircraft sensors that do not perform well in certain conditions.

The repeated use of air data reasoner 104 throughout the operation of an aircraft allows for the most trusted source sensor to change as the flight conditions change, thereby providing the pilot and consuming systems with the most accurate data available in real time. Further, air data reasoner 104 accounts for fault diagnostics on a sensor specific basis, thereby further ensuring that the most accurate or reliable sensor values are provided to consuming systems. In some prior art systems, data from a sensor indicating a fault is discarded for the remainder of the flight. Conversely, in the present disclosure, the repeated use of air data reasoner 104 allows for a sensor that may have previously indicated a fault to be used once the fault is no longer indicated. Thus, the system is able to use the data, while other systems may have discarded the useful data.

System 100 also provides the advantage of common error thresholds across consuming systems due to the table containing threshold values for each parameter and corresponding source sensor. Without a common error threshold, various consuming systems can indicate faults at various levels for the same measured parameter. With the common error threshold, there exists a clearer reaction to failure modes across consuming systems 106.

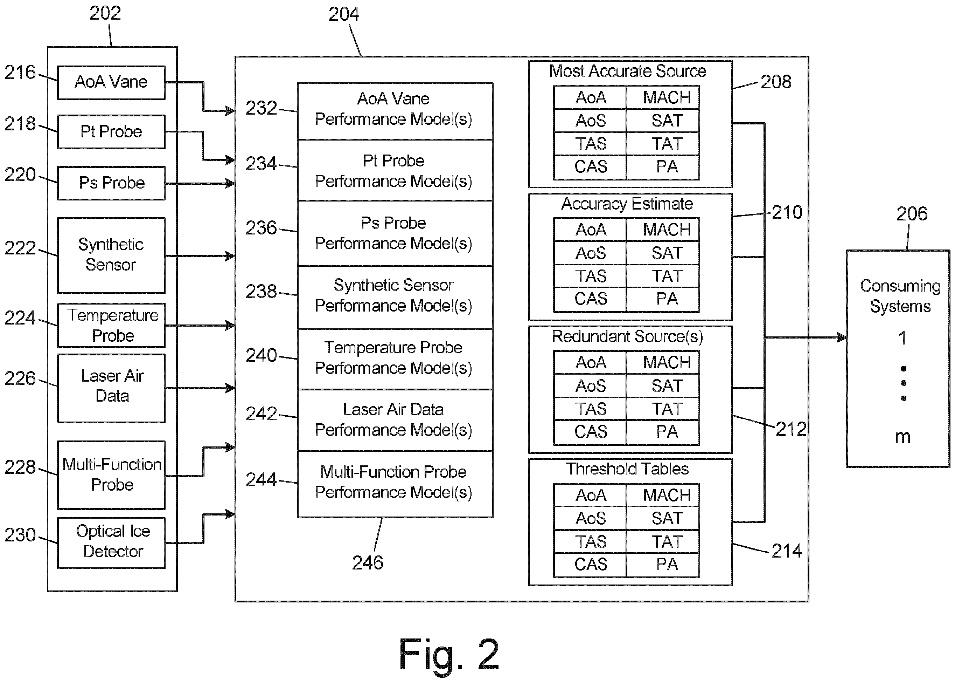

FIG. 2 is a schematic diagram of system 200 for using an air data reasoner to receive data from dissimilar sensors and provide outputs to consuming systems. System 200 is a schematic view of system 100, with labeled sensors and output parameters depicted for illustrative purposes. It is understood that the embodiment of system 200 is non-limiting, and additional or alternative sensors and parameters can be included. Further, additional generated outputs can be included.

System 200 includes input parameter sources 202, air data reasoner 204, and consuming systems 106 which are analogous to input parameter sources 102, air data reasoner 104, and consuming systems 106 of system 100. Input parameter sources 202 include angle of attack vane 216, pitot probe 218, static pressure probe 220, synthetic sensor 222, temperature probe 224, laser air data sensor 226, multi-function probe 228, and optical ice detector 230. Air data reasoner 204 includes angle of attack vane performance model(s) 232, pitot probe performance model(s) 234, static pressure probe performance model(s) 236, laser air data sensor performance model(s) 238, multi-function probe performance model(s) 240, and synthetic sensor performance model(s) 242. Air data reasoner 204 further includes most accurate source output 208, accuracy estimate output 210, available redundancy output 212, and threshold tables output 214.

Within system 200, each of the sensors contained within input parameter sources 202 are operably connected to air data reasoner 204 by a data bus connection. Thus, each of angle of attack vane 216, pitot probe 218, static pressure probe 220, synthetic sensor 222, temperature probe 224, laser air data sensor 226, multi-function probe 228, and optical ice detector 230 include an individual data bus connection for transmitting data to air data reasoner 204. In some embodiments, each of the sensors within input parameter sources 202 are connected to a communication device within air data reasoner 204, such as communication device 112 of system 100. Air data reasoner is operably connected to consuming systems 206. In some embodiments, most accurate source output 208, accuracy estimate output 210, available redundancy output 212, and threshold tables output 214 are connected to a communication device, such as communication device 112 of system 100, which is then connected to consuming systems 206.

In operation, each of the sensors contained within input parameter sources 202 are configured to measure and/or calculate values for various parameters during the operation of an aircraft. Angle of attack vane 216 can be a vane mounted external to the aircraft, wherein the vane is configured to measure the angle of attack of the aircraft based on mechanical rotation. Angle of attack vane 216 also produces a sensor health status indicative of the health of angle of attack vane 216. Upon measuring the angle of attack, angle of attack vane 216 can transmit the measured angle of attack value and the sensor health status along the data bus to air data reasoner 204.

Pitot probe 218 can be a probe mounted external to the aircraft, wherein the probe is configured to measure the pitot pressure based upon ram airflow through a pitot tube. Pitot probe 218 also produces a sensor health status indicative of the health of pitot probe 218. In some embodiments, the sensor health status includes an indication of any blockages within the pitot tube of pitot probe 218. Upon measuring the pitot pressure, pitot probe 218 can transmit the measured pitot pressure value and the sensor health status along the data bus to air data reasoner 204.

Static pressure probe 220 can be a probe or pair of probes mounted external to the aircraft, wherein the probe or pair of probes are configured to measure the static pressure based upon ambient pressure surrounding the static port of the static pressure probe or pair of probes. Static pressure probe 220 also produces a sensor health status indicative of the health of static pressure probe 220. In some embodiments, the sensor health status includes an indication of any blockages within the static port of static pressure probe 220. Upon measuring the static pressure, static pressure probe 220 can transmit the measured static pressure value and the sensor health status along the data bus to air data reasoner 204.

Synthetic sensor 222 can be a sensor configured to calculate various parameters based on other received parameters using computational models. The various parameters calculated by synthetic sensor include angle of attack, angle of sideslip, calibrated airspeed (CAS), and altitude. Synthetic sensor 222 also produces a sensor health status indicative of the health of synthetic sensor 222. Upon calculating angle of attack, angle of sideslip, CAS, and altitude, synthetic sensor 222 can transmit the calculated parameters and the sensor health status along the data bus to air data reasoner 204.

Temperature probe 224 can be a probe mounted external to the aircraft and configured to measure a total air temperature (TAT). Temperature probe 224 also produces a sensor health status indicative of the health of temperature probe 224. Upon measuring the TAT, temperature probe 224 can transmit the measured TAT value and the sensor health status along the data bus to air data reasoner 204.

Laser air data sensor 226 can be a sensor which uses optical laser light to determine various parameters. The various parameters can include true airspeed (TAS), static air temperature (SAT), Mach number, angle of attack, and angle of sideslip. Laser air data sensor 226 also produces a sensor health status indicative of the health of laser air data sensor 226. Upon determining TAS, SAT, Mach number, angle of attack, and angle of sideslip, laser air data sensor 226 can transmit the determined parameters and the sensor health status along the data bus to air data reasoner 204.

Multi-function probe 228 can be a probe mounted external to the aircraft. Multi-function probe 228 can be a singular probe unit containing a plurality of air data sensors for measuring various air data parameters. The various air data parameters measured by multi-function probe 228 can include pitot pressure, static pressure, angle of attack, and angle of sideslip. Multi-function probe 228 also produces a sensor health status indicative of the health of multi-function probe 228. Upon determining pitot pressure, static pressure, angle of attack, and angle of sideslip, multi-function probe 228 can transmit the determined parameters and the sensor health status along the data bus to air data reasoner 204

Optical ice detector 230 can be mounted external to the aircraft and configured to detect real-time icing conditions using laser light. Optical ice detector 230 can detect icing conditions by sensing a liquid water content (LWC) and ice water content (IWC). Optical ice detector 230 also produces a sensor health status indicative of the health of optical ice detector 230. Upon determining the icing conditions, optical ice detector 230 can transmit the icing conditions and the sensor health status along the data bus to air data reasoner 204.

The sensors described within input parameter sources 202 are intended as examples, and are intended to be non-limiting. Other sensors to measure air data parameters can be used in system 200. In some embodiments input parameter sources 202 can include other dissimilar sensors such as an acoustic sensor configured to measure air data parameters by use of sound waves. In still other embodiments, input parameter sources 202 can include multiple redundant sources of the same type mounted in different locations about the aircraft (e.g., multiple multi-function probes). In some embodiments, input parameter sources 202 can include additional environmental sensors, such as a magneto-restrictive ice sensor, in addition to optical ice detector 230.

Upon receiving air data from input parameter sources 202, air data reasoner 204 begins operation. Air data reasoner identifies the air data received and designates an appropriate performance model from within performance model repository 246 by which the air data will be evaluated for accuracy. The performance models of performance model repository 246 are examples of performance models that can be contained within performance model repository 110 of system 100. The performance models of performance model repository 246 can be in the form of any organized data structure. For example, in some embodiments, the performance models can be a series of tables, wherein the series of tables contain information relating to sensor performance as described above. Additionally or alternatively, the performance models can be in the form of graphs, charts, or any other data set. The examples listed are merely intended as examples and are non-limiting.

In the example embodiment of system 200, the data received from angle of attack vane 216 is assigned to angle of attack performance model(s) 232, the data received from pitot probe 218 is assigned to pitot probe performance model(s) 234, the data received from static pressure probe 220 is assigned to static pressure probe performance model(s) 236, the data received from synthetic sensor 222 is assigned to synthetic sensor performance model(s) 238, the data received from temperature probe 224 is assigned to temperature probe performance model(s) 240, the data received from laser air data sensor 226 is assigned to laser air data performance model(s) 242, and the data received from multi-function probe 228 is assigned to multi-function probe performance model(s) 244.

The performance models are then executed to determine an accuracy of each parameter received from input parameter sources 202. Thus, for example, the angle of attack vane performance model(s) is/are executed to determine an accuracy of the angle of attack as measured by angle of attack vane 216. For source sensors with multiple parameters, each parameter is evaluated for accuracy upon execution of the corresponding performance models. Thus, for example, multi-function probe performance model(s) 244 is/are executed to determine an accuracy of the pitot pressure, the static pressure, the angle of attack, and the angle of sideslip, wherein such parameters were measured and/or calculated by multi-function probe 228.

As described with respect to system 100, performance models contained within performance model repository 246 can be any data structure related to performance of aircraft sensors. The performance models can contain data relating to sensor performance based on current flight conditions, fault diagnostics, environmental conditions, and sensor placement.

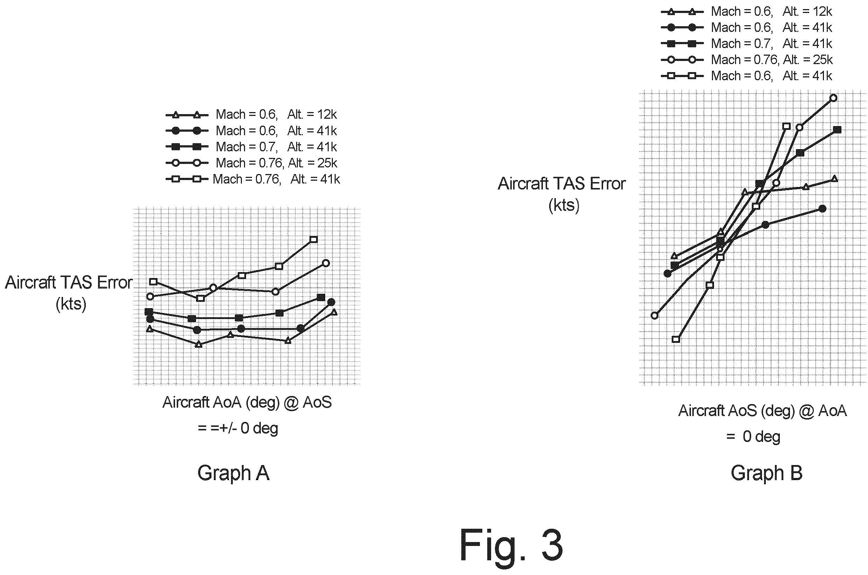

In the example embodiment of system 200, the performance models can include data relating to how the current flight conditions affect the sensor performance. Thus, for example, the performance model(s) evaluate the accuracy of the sensor data based upon flight level, airspeed, angle of attack, and air temperature. The current flight conditions are factored into the performance models in addition to environmental data, fault diagnostics, and sensor placement. Additional description regarding flight envelope analysis in the performance models is provided below in the description of FIG. 3.

In the example embodiment of system 200, the performance models can include data relating to how the sensor health status of each of the source sensors of input parameter sources 202 affects the sensor performance. Such data can then be factored into the accuracy determination of the corresponding performance model(s). For example, in a flight condition where the air contains volcanic ash, pitot probe 218 may be clogged with ash. Pitot probe 218 would then return a sensor health status indicating that the returned data may be unreliable to air data reasoner 204. The health status would then be factored into pitot probe performance module(s) 234 along with additional flight conditions, environmental, and sensor placement characteristics to arrive at a determined accuracy.

In the example embodiment of system 200, the performance models can include data relating to how the icing conditions impact the accuracy of each of the source sensors of input parameter sources 202. Optical ice detector 230 can return data indicative of icing conditions. Such data can then be factored into the accuracy determination of the performance models of performance model repository 246 along with additional flight conditions, environmental, and sensor placement characteristics to arrive at a determined accuracy.

In the example embodiment of system 200, the performance models can include data relating to how the sensor placement impacts the accuracy of each of the source sensors of input parameter sources 202. Such data can then be factored into the accuracy determination of the corresponding performance model(s). For example, in a flight condition where pitot probe 218 is mounted downstream of a ram air turbine (RAT). The RAT may be configured to deploy in the case of failing power systems as a backup power system. Once deployed, the RAT may interrupt airflow to pitot probe 218, thereby decreasing the accuracy of the pitot pressure measured. Thus, in such a scenario, pitot probe performance model(s) 234 can factor in the location of pitot probe 218 and the interruption of airflow due to the RAT turbine deployment and determine the accuracy accordingly.

Upon determining the accuracy of the parameters received from input parameter sources 202, air data reasoner 204 then generates most accurate source output 208, accuracy estimate output 210, available redundancy output 212, and threshold tables output 214 for each measured and/or calculated parameter. In the example embodiment of system 200, the measured and/or calculated parameters include angle of attack, angle of sideslip, total air speed, calibrated airspeed, Mach number, static air temperature, total air temperature, and pressure altitude.

Most accurate source output 208 is determined by the accuracy estimates generated by air data reasoner 204. The accuracy estimates generated by air data reasoner 204 are sorted on a parameter basis. Thus, the most accurate source sensors from input parameter sources 202 are determined for each output parameter. The corresponding accuracy estimate for each output parameter is also output in accuracy estimate output 210. In some embodiments, and accuracy indicator is output for each output parameter, wherein the accuracy indicator is indicative of the accuracy of the most accurate source sensor for each output parameter. In other embodiments, an accuracy indicator is output for every source sensor corresponding to the output parameter.

Available redundancy output 212 uses the accuracy estimates generated by air data reasoner 204 to determine remaining redundant sources for each parameter. In some embodiments, a source aircraft sensor is considered a redundant source if the accuracy estimate demonstrates that the parameter value measured and/or calculated by the corresponding source aircraft sensor is less accurate than the most accurate source, but still within an acceptable threshold of error such that the value is not discarded. Thus, some source aircraft sensors that measure and/or calculate a parameter value may be discarded if the error of such a measured and/or calculated value is outside of an acceptable threshold of error. In some embodiments, available redundancy output 212 includes a list of the output parameters, the redundant source sensors corresponding to each parameter, and the corresponding measured and/or calculated parameter values. In some embodiments, available redundancy output 212 also includes the accuracy estimate for each of the parameter values.

Threshold tables output 214 uses the accuracy estimates generated by air data reasoner 204 to generate threshold tables for each parameter and corresponding source sensor. In some embodiments, the threshold values for each parameter and corresponding source sensor can be based on the operational range of the parameter and source sensor combination. In other embodiments, the threshold values for each parameter and corresponding source sensor can be based on a narrower range within the operational range of the parameter and source sensor combination. In some embodiments, the threshold values for each parameter and corresponding source sensor can be specific to the current flight conditions and environmental conditions. Thus, the threshold values are determined based on the operational range of the source sensor for the current flight conditions based upon the performance models. In some embodiments, the threshold tables are generated on a parameter basis for the most accurate source sensor. In other embodiments, threshold tables are generated for each output parameter and the corresponding source sensors.

Upon generating the outputs including most accurate source output 208, accuracy estimate output 210, available redundancy output 212, and threshold tables output 214 for each measured and/or calculated parameter, air data reasoner 204 transmits the outputs to consuming systems 206.

System 200 is a schematic implementation of an embodiment of system 100, and therefore system 200 provides similar advantages. In the embodiment of system 200, a variety of sources from input parameter sources 202 are configured to send data to air data reasoner 204. System 200 thus provides the advantage of selecting the most accurate source from input parameter sources 202 based on flight conditions. Several examples are included herein to illustrate the utility of system 200.

In one example, multi-function probe 228 is installed in a position that optimizes local-body angle of attack sensitivity at the expense of sensitivity to pitot pressure. There may, however, be a second multi-function probe installed in a position configured to optimize pitot pressure sensitivity over angle of attack sensitivity. In a prior art system, both sensors may be evaluated as having the same performance. Air data reasoner 104, however, determines that the location of the second multi-function probe optimizes it for pitot pressure outputs, and can factor that into the best parameter selection.

In another example, multi-function probe 228 is installed in a position near the landing gear such that when the landing gear is deployed, airflow to multi-function probe is disrupted. Conversely, pitot probe 218 is mounted in an area wherein there is no disruption of airflow. Thus, multi-function probe performance model(s) 244 can contain location-based data such that when the landing gear is deployed, the output pitot pressure of multi-function probe 228 is given a lower accuracy indication. Pitot pressure probe 218 can then be used to output the pitot pressure to a higher degree of accuracy.

In yet another example, severe icing conditions are detected by optical ice detector 230. As such, the accuracy of angle of attack vane 216 is decreased, as the mechanical movement of angle of attack vane 216 is hindered by ice buildup. As such, angle of attack vane performance model(s) 232 accounts for such an atmospheric condition and lowers the accuracy indication of the angle of attack measurement from angle of attack vane 216. Instead, for example, laser air data sensor 226 can be used to detect angle of attack, provided that the angle of attack determined by laser air data sensor 226 is given a higher accuracy indication than other source sensors that output angle of attack.

Further examples can include selection of sources based on a low airspeed, high altitude, or other flight conditions. The aforementioned examples are intended to be non-limiting and are merely illustrative of the capabilities of system 200. The aforementioned examples clearly illustrate the advantages of system 200. Air data reasoner 204 functions to select outputs including most accurate source output 208, accuracy estimate output 210, available redundancy output 212, which provide the advantage of determining the most accurate source and available redundant sources for each aircraft parameter.

System 200 also provides the advantage of common error thresholds across consuming systems due to the table containing threshold values for each parameter and corresponding source sensor. Without a common error threshold, various consuming systems can indicate faults at various levels for the same measured parameter. With the common error threshold, there exists a clearer reaction to failure modes across consuming systems 106.

FIG. 3 is a sample of performance models 300 contained within multi-function probe performance model(s) 244 of air data reasoner 204. Performance models 300 include Graph A and Graph B. Graph A depicts the TAS error for multi-function probe 244 as a function of angle of attack, Mach number, and altitude. Graph B depicts the TAS error for multi-function probe 244 as a function of angle of sideslip, Mach number and altitude. Graph A and Graph B are merely one example of how performance models can evaluate accuracy of a sensor given current flight conditions.

Air data reasoner can also evaluate the TAS determined by, for example, laser air data sensor 226 via laser air data performance model(s) 242. In one example, for the same conditions as those depicted in Graph A and Graph B, laser air data performance model(s) 242 indicates better performance for the flight conditions with respect to the aircraft TAS error. Thus, in such an example, air data reasoner 204 outputs laser air data sensor 226 as the most accurate source for measuring TAS and provides an accuracy estimate based on the laser air data performance model prediction of aircraft TAS error. Air data reasoner 204 can also output multi-function probe 228 as a redundant source, indicating its correspondingly lower accuracy indication.

Performance models 300 are merely intended as an example implementation of one or more performance models. Performance models 300 can include additional or alternative graphs, charts, tables, or other organized data structures. The additional or alternative data can include data relating to sensor performance based on current flight conditions, fault diagnostics, environmental conditions, and/or sensor placement.

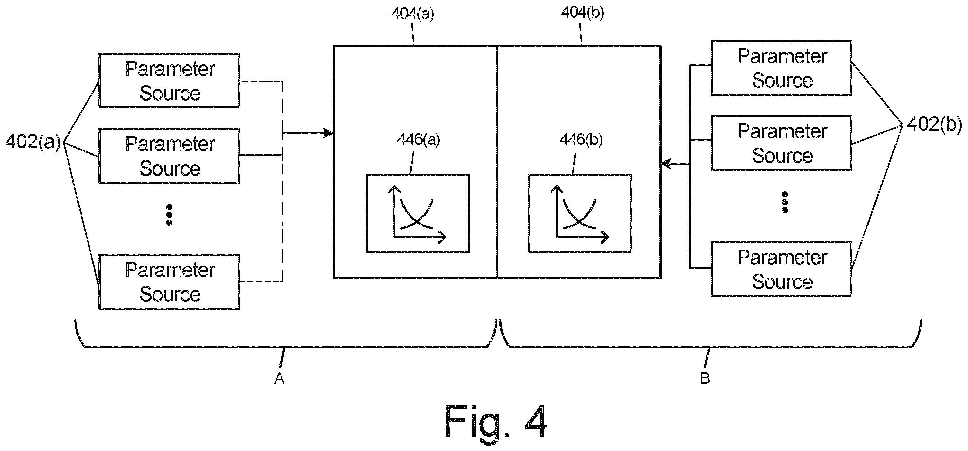

FIG. 4 is a dual lane embodiment of system 400 for using an air data reasoner to evaluate dissimilar sources. System 400 is a dual lane implementation of system 100 and system 200. System 400 includes lane A and lane B, which are communicatively isolated. In some embodiments, lane A can be a pilot channel while lane B can be a co-pilot channel, or vice-versa. Other examples may include a standby channel, a backup channel, or any additional or alternative channels. While the depicted embodiment is a dual lane implementation, it is understood that any number (n) of communicatively isolated channels can be included with corresponding performance models and air data reasoners. For example, a system with three channels or a system with four channels can be implemented.

Lane A includes input parameter sources 402(a), air data reasoner 404(a), and performance models 446(a). Lane B includes input parameter sources 402(b), air data reasoner 404(b), and performance models 446(b). Input parameter sources 402(a) are operably connected to air data reasoner 404(a). Performance models 446(a) are included within air data reasoner 404(a). Input parameter sources 402(b) are operably connected to air data reasoner 404(b). Performance models 446(b) are included within air data reasoner 404(b).

In operation of lane A, input parameter sources 402(a) provide values for measured and/or calculated parameters to air data reasoner 404(a). Air data reasoner 404(a) evaluates the accuracy of such parameters using performance models 446(a). Air data reasoner 404(a) generates outputs such as the most accurate source output, the accuracy estimate output, the available redundancy output, and the threshold tables output for each measured and/or calculated parameter.

In operation of lane B, input parameter sources 402(b) provide values for measured and/or calculated parameters to air data reasoner 404(b). Air data reasoner 404(b) evaluates the accuracy of such parameters using performance models 446(b). Air data reasoner 404(b) generates outputs such as the most accurate source output, the accuracy estimate output, the available redundancy output, and the threshold tables output for each measured and/or calculated parameter.

In the dual lane implementation, lane A and lane B are communicatively isolated. Thus, each side may have a different set of sensor inputs, as depicted by input parameter sources 402(a) and input parameter sources 402(b). Thus, lane A and lane B operate independently with their respective input parameter sources and respective air data reasoners evaluating said input parameter sources. In some embodiments, however, the independence between lane A and lane B can be violated if a set threshold of redundant sources is reached. Thus, if there does not exist a sufficient number of redundant sources for a given parameter in lane A, independence may be violated, and parameter information can be retrieved from lane B.

System 400 is advantageous because it demonstrates that the air data reasoner of systems 100 and 200 can also be implemented in a dual lane architecture, wherein a pilot channel and a co-pilot channel are included. Further, the output list of redundant sources can ensure that independence is violated when necessary, in order to provide a sufficient number of redundant sources.

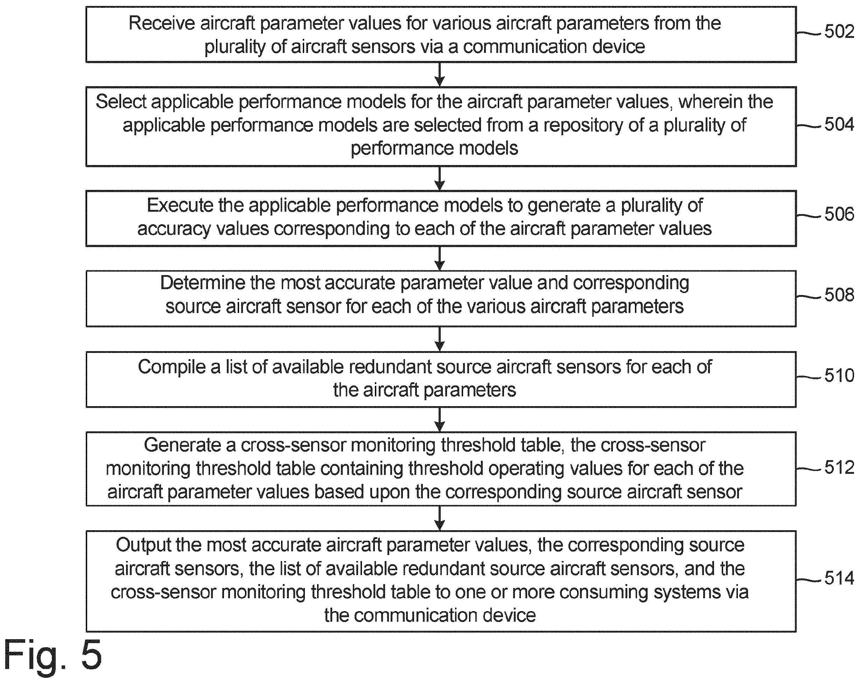

FIG. 5 is a flowchart depicting method 500 for evaluating aircraft sensor data obtained from the aircraft sensors via the air data reasoner. Reference will be made to the part numbers of system 100 for clarity.

Method 500 begins at step 502, wherein air data reasoner 104 receives aircraft parameter values for various aircraft parameters from input parameter sources 102. The input parameters are received via communication device 112 of air data reasoner 104.

At step 504, air data reasoner 104 selects applicable performance models from performance model repository 110. The applicable performance models are selected based upon the aircraft parameter values received from input parameter sources 102. In some embodiments, multiple performance models can be selected for a single aircraft parameter value.

At step 506, air data reasoner 104 executes the applicable performance models via processor 108. Execution of the plurality of performance models results in the generation of accuracy values corresponding to each of the aircraft parameter values.

At step 508, air data reasoner 104 determines the most accurate parameter value and corresponding source aircraft sensor for each of the various aircraft parameters via processor 108.

At step 510, air data reasoner 104 compiles a list of available redundant source aircraft sensors for each of the aircraft parameters via processor 108.

At step 512, air data reasoner 104 generates a cross-sensor monitoring threshold table via processor 108. The cross-sensor monitoring threshold table includes threshold operating values for each of the aircraft parameter values based upon the corresponding source aircraft sensor.

At step 514, air data reasoner 104 outputs the most accurate aircraft parameter values, the corresponding source aircraft sensors, the list of available redundant source aircraft sensors, and the cross-sensor monitoring threshold table to one or more consuming systems via the communication device.

According to the techniques of this disclosure, the air data reasoner disclosed provides a means for determining the most accurate sources of air data available within an aircraft. The air data reasoner does so by evaluating the accuracy of the air data sensors and their corresponding sensed and/or measured parameters with performance models containing predictive data based on flight conditions, environmental conditions, sensor health data, and sensor placement. The techniques of this disclosure allow for consuming systems of air data to have access to the most accurate data as well as access to a list of redundant data that is also useable. The techniques of this disclosure ultimately provide for a more organized and robust system for communicating air data parameters to consuming systems.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention is defined by the appended claims.

## Claims

1. An air data reasoner system (100) for evaluating aircraft sensor data obtained from a plurality of aircraft sensors on an aircraft, the system (100) comprising:
a communication device (112) operably connectable to the plurality of aircraft sensors;
a processor (108) operably connected to the communication device (112);
a repository (110) of a plurality of performance models operably connected to the processor (108);
computer-readable memory (114) operably connected to the processor, the computer-readable memory (114) encoded with instructions that, when executed by the processor (108), cause the system (100) to:
receive aircraft parameter values for various aircraft parameters from the plurality of aircraft sensors via the communication device (112);
select applicable performance models for the aircraft parameter values, wherein the applicable performance models are selected from the repository (110) of the plurality of performance models;
execute the applicable performance models to generate a plurality of accuracy values corresponding to each of the aircraft parameter values;
determine the most accurate parameter values and corresponding source aircraft sensor for each of the various aircraft parameters;
compile a list of available redundant source aircraft sensors for each of the aircraft parameters; and
output the most accurate parameter values, the corresponding source aircraft sensors, and the list of available redundant source aircraft sensors to one or more consuming systems (106) via the communication device (112).

2. The system (100) of claim 1, wherein the computer-readable memory (114) is further encoded with instructions that, when executed by the one or more processors (108), cause the system to:
generate a threshold table, the threshold table containing threshold operating values for each of the aircraft parameter values based upon the corresponding source aircraft sensor; and
output the threshold table to the one or more consuming systems (106) via the communication device (112).

3. The system (100) of claim 1 or 2, wherein the list of available redundant source aircraft sensors for each of the aircraft parameters is sorted according to the accuracy values of each of the aircraft parameter values.

4. The system (100) of any preceding claim, wherein one or more of the applicable performance models for the aircraft sensor data provide an accuracy value based, in part, upon a flight condition of the aircraft, and/or
wherein one or more of the applicable performance models for the aircraft sensor data provide an accuracy value based, in part, upon an installation location of the source aircraft sensor.

5. The system (100) of any preceding claim, wherein one or more of the applicable performance models for the aircraft sensor data provide an accuracy value based in part upon atmospheric inputs.

6. The system (100) of claim 5, wherein the atmospheric inputs include icing conditions;
wherein optionally, the icing conditions include a liquid water content quantity and an ice water content quantity.

7. The system (100) of any preceding claim, wherein the computer-readable memory (114) is further encoded with instructions that, when executed by the one or more processors (108), cause the system to:
receive fault diagnostics data from the plurality of aircraft sensors via the communication device (112), the fault diagnostics data indicative of a sensor status.

8. The system (100) of claim 7, wherein one or more of the applicable performance models for the aircraft sensor data provide an accuracy value based, in part, upon fault diagnostics data of the source aircraft sensor.

9. The system (100) of any preceding claim, wherein one or more of the applicable performance models for the aircraft sensor data provide an accuracy value based, in part, upon sensor specific performance characteristics.

10. The system (100) of any preceding claim, wherein the plurality of aircraft sensors comprises an angle-of-attack vane, a total pressure probe, a synthetic air data sensor, a laser air data sensor, an acoustic air data sensor, and a multifunction probe.

11. The system (100) of any preceding claim, wherein:
the aircraft includes a multi-lane architecture comprising a plurality of aircraft channels;
the air data reasoner system (100) includes one or more additional air data reasoners corresponding to each of the plurality of aircraft channels; and
the air data reasoner system (100) and the one or more additional air data reasoners corresponding to each of the plurality of aircraft channels are communicatively isolated.

12. The system (100) of any preceding claim, wherein the air data reasoner system (100) is housed within an integrated modular avionics unit; or
wherein the air data reasoner system (100) is housed within a flight controls system.

13. The system (100) of any preceding claim, wherein the plurality of performance models are generated by applying a neural network or a standard computational model to flight simulation data, flight test data, or a combination of flight simulation data and flight test data, and/or
wherein the aircraft parameters comprise angle of attack, angle of sideslip, true airspeed, calibrated airspeed, Mach number, static air temperature, total air temperature, and pressure altitude, and/or
wherein the plurality of aircraft sensors comprise synthetic air data sources, pneumatic air data sources, laser air data sources, and acoustic air data sources.

14. A method for evaluating aircraft sensor data obtained from a plurality of aircraft sensors on an aircraft via an air data reasoner (104), the method comprising:
receiving aircraft parameter values for various aircraft parameters from the plurality of aircraft sensors via a communication device (112); and
selecting applicable performance models for the aircraft parameter values, wherein the applicable performance models are selected from a repository (110) of a plurality of performance models;
executing the applicable performance models to generate a plurality of accuracy values corresponding to each of the aircraft parameter values;
determining the most accurate parameter value and corresponding source aircraft sensor for each of the various aircraft parameters;
compiling a list of available redundant source aircraft sensors for each of the aircraft parameters; and
outputting the most accurate aircraft parameter values, the corresponding source aircraft sensors, and the list of available redundant source aircraft sensors to one or more consuming systems (106) via the communication device (112).

15. The method of claim 14, further comprising:
generating a threshold table, the threshold table containing threshold operating values for each of the aircraft parameter values based upon the corresponding source aircraft sensor; and
outputting the threshold table to the one or more consuming systems (106) via the communication device (112).

## Patentansprüche

1. Ein Luftdaten-Reasoner-System (100) zur Auswertung von Flugzeugsensordaten, die von einer Vielzahl von Flugzeugsensoren an einem Flugzeug erhalten werden, wobei das System (100) umfasst:
eine Kommunikationsvorrichtung (112), die betriebsfähig mit der Vielzahl von Flugzeugsensoren verbindbar ist;
einen Prozessor (108), der betriebsfähig mit der Kommunikationsvorrichtung (112) verbunden ist;
ein Repository (110) einer Vielzahl von Leistungsmodellen, das betriebsfähig mit dem Prozessor (108) verbunden ist;
einen computerlesbaren Speicher (114), der betriebsfähig mit dem Prozessor verbunden ist, wobei der computerlesbare Speicher (114) mit Anweisungen codiert ist, die, wenn sie vom Prozessor (108) ausgeführt werden, das System (100) veranlassen zum:
Empfangen von Flugzeugparameterwerten für verschiedene Flugzeugparameter von der Vielzahl von Flugzeugsensoren über die Kommunikationsvorrichtung (112);
Auswählen von zutreffenden Leistungsmodellen für die Flugzeugparameterwerte, wobei die zutreffenden Leistungsmodelle aus dem Repository (110) der Vielzahl von Leistungsmodellen ausgewählt werden;
Ausführen der zutreffenden Leistungsmodelle, um eine Vielzahl von Genauigkeitswerten zu erzeugen, die jedem der Flugzeugparameterwerte entsprechen;
Bestimmen der genauesten Parameterwerte und des entsprechenden Quell-Flugzeugsensors für jeden der verschiedenen Flugzeugparameter;
Zusammenstellen einer Liste von verfügbaren redundanten Quell-Flugzeugsensoren für jeden der Flugzeugparameter; und
Ausgeben der genauesten Parameterwerte, der entsprechenden Quell-Flugzeugsensoren und der Liste der verfügbaren redundanten Quell-Flugzeugsensoren an ein oder mehrere Verbrauchersysteme (106) über die Kommunikationsvorrichtung (112).

2. Das System (100) nach Anspruch 1, wobei der computerlesbare Speicher (114) ferner mit Anweisungen codiert ist, die, wenn sie von dem einen oder den mehreren Prozessoren (108) ausgeführt werden, das System veranlassen zum:
Erzeugen einer Schwellenwerttabelle, wobei die Schwellenwerttabelle Schwellenbetriebswerte für jeden der Flugzeugparameterwerte basierend auf dem entsprechenden Quell-Flugzeugsensor enthält; und
Ausgeben der Schwellenwerttabelle an das eine oder die mehreren Verbrauchersysteme (106) über die Kommunikationsvorrichtung (112).

3. Das System (100) nach Anspruch 1 oder 2, wobei die Liste der verfügbaren redundanten Quell-Flugzeugsensoren für jeden der Flugzeugparameter gemäß den Genauigkeitswerten jedes der Flugzeugparameterwerte sortiert ist.

4. Das System (100) nach einem der vorhergehenden Ansprüche, wobei eines oder mehrere der zutreffenden Leistungsmodelle für die Flugzeugsensordaten einen Genauigkeitswert bereitstellen, der teilweise auf einem Flugzustand des Flugzeugs basiert, und/oder
wobei eines oder mehrere der zutreffenden Leistungsmodelle für die Flugzeugsensordaten einen Genauigkeitswert bereitstellen, der teilweise auf einem Einbauort des Quell-Flugzeugsensors basiert.

5. Das System (100) nach einem der vorhergehenden Ansprüche, wobei eines oder mehrere der zutreffenden Leistungsmodelle für die Flugzeugsensordaten einen Genauigkeitswert bereitstellen, der teilweise auf atmosphärischen Eingangsgrößen basiert.

6. Das System (100) nach Anspruch 5, wobei die atmosphärischen Eingangsgrößen Vereisungsbedingungen umfassen;
wobei optional die Vereisungsbedingungen eine Flüssigwassergehaltsmenge und eine Eiswassergehaltsmenge umfassen.

7. Das System (100) nach einem der vorhergehenden Ansprüche, wobei der computerlesbare Speicher (114) ferner mit Anweisungen codiert ist, die, wenn sie von dem einen oder den mehreren Prozessoren (108) ausgeführt werden, das System veranlassen zum:
Empfangen von Fehlerdiagnosedaten von der Vielzahl von Flugzeugsensoren über die Kommunikationsvorrichtung (112), wobei die Fehlerdiagnosedaten einen Sensorstatus anzeigen.

8. Das System (100) nach Anspruch 7, wobei eines oder mehrere der zutreffenden Leistungsmodelle für die Flugzeugsensordaten einen Genauigkeitswert bereitstellen, der teilweise auf Fehlerdiagnosedaten des Quell-Flugzeugsensors basiert.

9. Das System (100) nach einem der vorhergehenden Ansprüche, wobei eines oder mehrere der zutreffenden Leistungsmodelle für die Flugzeugsensordaten einen Genauigkeitswert bereitstellen, der teilweise auf sensorspezifischen Leistungsmerkmalen basiert.

10. Das System (100) nach einem der vorhergehenden Ansprüche, wobei die Vielzahl von Flugzeugsensoren eine Anstellwinkelfahne, eine Gesamtdrucksonde, einen synthetischen Luftdatensensor, einen Laser-Luftdatensensor, einen akustischen Luftdatensensor und eine Multifunktionssonde umfasst.

11. Das System (100) nach einem der vorhergehenden Ansprüche, wobei:
das Flugzeug eine Mehrkanalarchitektur umfasst, die eine Vielzahl von Flugzeugkanälen umfasst;
das Luftdaten-Reasoner-System (100) einen oder mehrere zusätzliche Luftdaten-Reasoner umfasst, die jedem der Vielzahl von Flugzeugkanälen entsprechen; und
das Luftdaten-Reasoner-System (100) und der eine oder die mehreren zusätzlichen Luftdaten-Reasoner, die jedem der Vielzahl von Flugzeugkanälen entsprechen, kommunikativ isoliert sind.

12. Das System (100) nach einem der vorhergehenden Ansprüche, wobei das Luftdaten-Reasoner-System (100) innerhalb einer integrierten modularen Avionikeinheit untergebracht ist; oder
wobei das Luftdaten-Reasoner-System (100) innerhalb eines Flugsteuerungssystems untergebracht ist.

13. Das System (100) nach einem der vorhergehenden Ansprüche, wobei die Vielzahl von Leistungsmodellen erzeugt werden, indem ein neuronales Netzwerk oder ein Standardberechnungsmodell auf Flugsimulationsdaten, Flugtestdaten oder eine Kombination aus Flugsimulationsdaten und Flugtestdaten angewendet wird, und/oder
wobei die Flugzeugparameter Anstellwinkel, Schiebewinkel, wahre Fluggeschwindigkeit, kalibrierte Fluggeschwindigkeit, Machzahl, statische Lufttemperatur, Gesamtlufttemperatur und Druckhöhe umfassen, und/oder
wobei die Vielzahl von Flugzeugsensoren synthetische Luftdatenquellen, pneumatische Luftdatenquellen, Laser-Luftdatenquellen und akustische Luftdatenquellen umfasst.

14. Ein Verfahren zur Auswertung von Flugzeugsensordaten, die von einer Vielzahl von Flugzeugsensoren an einem Flugzeug über einen Luftdaten-Reasoner (104) erhalten werden, wobei das Verfahren umfasst:
Empfangen von Flugzeugparameterwerten für verschiedene Flugzeugparameter von der Vielzahl von Flugzeugsensoren über eine Kommunikationsvorrichtung (112); und
Auswählen von zutreffenden Leistungsmodellen für die Flugzeugparameterwerte, wobei die zutreffenden Leistungsmodelle aus einem Repository (110) einer Vielzahl von Leistungsmodellen ausgewählt werden;
Ausführen der zutreffenden Leistungsmodelle, um eine Vielzahl von Genauigkeitswerten zu erzeugen, die jedem der Flugzeugparameterwerte entsprechen;
Bestimmen des genauesten Parameterwerts und des entsprechenden Quell-Flugzeugsensors für jeden der verschiedenen Flugzeugparameter;
Zusammenstellen einer Liste von verfügbaren redundanten Quell-Flugzeugsensoren für jeden der Flugzeugparameter; und
Ausgeben der genauesten Flugzeugparameterwerte, der entsprechenden Quell-Flugzeugsensoren und der Liste der verfügbaren redundanten Quell-Flugzeugsensoren an ein oder mehrere Verbrauchersysteme (106) über die Kommunikationsvorrichtung (112).

15. Das Verfahren nach Anspruch 14, ferner umfassend:
Erzeugen einer Schwellenwerttabelle, wobei die Schwellenwerttabelle Schwellenbetriebswerte für jeden der Flugzeugparameterwerte basierend auf dem entsprechenden Quell-Flugzeugsensor enthält; und
Ausgeben der Schwellenwerttabelle an das eine oder die mehreren Verbrauchersysteme (106) über die Kommunikationsvorrichtung (112).

## Revendications

1. Un système de raisonnement de données air (100) pour évaluer des données de capteurs d'aéronef obtenues à partir d'une pluralité de capteurs d'aéronef sur un aéronef, le système (100) comprenant :
un dispositif de communication (112) pouvant être connecté fonctionnellement à la pluralité de capteurs d'aéronef ;
un processeur (108) connecté fonctionnellement au dispositif de communication (112) ;
un référentiel (110) d'une pluralité de modèles de performance connecté fonctionnellement au processeur (108) ;
une mémoire lisible par ordinateur (114) connectée fonctionnellement au processeur, la mémoire lisible par ordinateur (114) codée avec des instructions qui, lorsqu'elles sont exécutées par le processeur (108), amènent le système (100) à :
recevoir des valeurs de paramètres d'aéronef pour divers paramètres d'aéronef à partir de la pluralité de capteurs d'aéronef via le dispositif de communication (112) ;
sélectionner des modèles de performance applicables pour les valeurs de paramètres d'aéronef, dans lequel les modèles de performance applicables sont sélectionnés à partir du référentiel (110) de la pluralité de modèles de performance ;
exécuter les modèles de performance applicables pour générer une pluralité de valeurs de précision correspondant à chacune des valeurs de paramètres d'aéronef ;
déterminer les valeurs de paramètres les plus précises et le capteur d'aéronef source correspondant pour chacun des divers paramètres d'aéronef ;
compiler une liste de capteurs d'aéronef source redondants disponibles pour chacun des paramètres d'aéronef ; et
fournir en sortie les valeurs de paramètres les plus précises, les capteurs d'aéronef source correspondants, et la liste des capteurs d'aéronef source redondants disponibles à un ou plusieurs systèmes consommateurs (106) via le dispositif de communication (112).

2. Le système (100) de la revendication 1, dans lequel la mémoire lisible par ordinateur (114) est en outre codée avec des instructions qui, lorsqu'elles sont exécutées par les un ou plusieurs processeurs (108), amènent le système à :
générer une table de seuils, la table de seuils contenant des valeurs de fonctionnement de seuil pour chacune des valeurs de paramètres d'aéronef en fonction du capteur d'aéronef source correspondant ; et
fournir en sortie la table de seuils aux un ou plusieurs systèmes consommateurs (106) via le dispositif de communication (112).

3. Le système (100) de la revendication 1 ou 2, dans lequel la liste des capteurs d'aéronef source redondants disponibles pour chacun des paramètres d'aéronef est triée selon les valeurs de précision de chacune des valeurs de paramètres d'aéronef.

4. Le système (100) de l'une quelconque des revendications précédentes, dans lequel un ou plusieurs des modèles de performance applicables pour les données de capteurs d'aéronef fournissent une valeur de précision basée, en partie, sur une condition de vol de l'aéronef, et/ou
dans lequel un ou plusieurs des modèles de performance applicables pour les données de capteurs d'aéronef fournissent une valeur de précision basée, en partie, sur un emplacement d'installation du capteur d'aéronef source.

5. Le système (100) de l'une quelconque des revendications précédentes, dans lequel un ou plusieurs des modèles de performance applicables pour les données de capteurs d'aéronef fournissent une valeur de précision basée en partie sur des entrées atmosphériques.

6. Le système (100) de la revendication 5, dans lequel les entrées atmosphériques comprennent des conditions de givrage ;
dans lequel, en option, les conditions de givrage comprennent une quantité de contenu en eau liquide et une quantité de contenu en eau glacée.

7. Le système (100) de l'une quelconque des revendications précédentes, dans lequel la mémoire lisible par ordinateur (114) est en outre codée avec des instructions qui, lorsqu'elles sont exécutées par les un ou plusieurs processeurs (108), amènent le système à :
recevoir des données de diagnostic de panne à partir de la pluralité de capteurs d'aéronef via le dispositif de communication (112), les données de diagnostic de panne étant indicatives d'un état de capteur.

8. Le système (100) de la revendication 7, dans lequel un ou plusieurs des modèles de performance applicables pour les données de capteurs d'aéronef fournissent une valeur de précision basée, en partie, sur les données de diagnostic de panne du capteur d'aéronef source.

9. Le système (100) de l'une quelconque des revendications précédentes, dans lequel un ou plusieurs des modèles de performance applicables pour les données de capteurs d'aéronef fournissent une valeur de précision basée, en partie, sur des caractéristiques de performance spécifiques au capteur.

10. Le système (100) de l'une quelconque des revendications précédentes, dans lequel la pluralité de capteurs d'aéronef comprend une girouette d'incidence, une sonde de pression totale, un capteur de données air synthétique, un capteur de données air laser, un capteur de données air acoustique, et une sonde multifonction.

11. Le système (100) de l'une quelconque des revendications précédentes, dans lequel :
l'aéronef comprend une architecture multi-voies comprenant une pluralité de voies d'aéronef ;
le système de raisonnement de données air (100) comprend un ou plusieurs raisonneurs de données air supplémentaires correspondant à chacune de la pluralité de voies d'aéronef ; et
le système de raisonnement de données air (100) et les un ou plusieurs raisonneurs de données air supplémentaires correspondant à chacune de la pluralité de voies d'aéronef sont isolés en communication.

12. Le système (100) de l'une quelconque des revendications précédentes, dans lequel le système de raisonnement de données air (100) est logé dans une unité d'avionique modulaire intégrée ; ou
dans lequel le système de raisonnement de données air (100) est logé dans un système de commandes de vol.

13. Le système (100) de l'une quelconque des revendications précédentes, dans lequel la pluralité de modèles de performance est générée en appliquant un réseau de neurones ou un modèle computationnel standard à des données de simulation de vol, des données d'essai en vol, ou une combinaison de données de simulation de vol et de données d'essai en vol, et/ou
dans lequel les paramètres d'aéronef comprennent l'angle d'incidence, l'angle de dérapage, la vitesse vraie, la vitesse calibrée, le nombre de Mach, la température statique de l'air, la température totale de l'air, et l'altitude de pression, et/ou
dans lequel la pluralité de capteurs d'aéronef comprend des sources de données air synthétiques, des sources de données air pneumatiques, des sources de données air laser, et des sources de données air acoustiques.

14. Un procédé pour évaluer des données de capteurs d'aéronef obtenues à partir d'une pluralité de capteurs d'aéronef sur un aéronef via un raisonneur de données air (104), le procédé comprenant :
la réception de valeurs de paramètres d'aéronef pour divers paramètres d'aéronef à partir de la pluralité de capteurs d'aéronef via un dispositif de communication (112) ; et
la sélection de modèles de performance applicables pour les valeurs de paramètres d'aéronef, dans lequel les modèles de performance applicables sont sélectionnés à partir d'un référentiel (110) d'une pluralité de modèles de performance ;
l'exécution des modèles de performance applicables pour générer une pluralité de valeurs de précision correspondant à chacune des valeurs de paramètres d'aéronef ;
la détermination de la valeur de paramètre la plus précise et du capteur d'aéronef source correspondant pour chacun des divers paramètres d'aéronef ;
la compilation d'une liste de capteurs d'aéronef source redondants disponibles pour chacun des paramètres d'aéronef ; et
la fourniture en sortie des valeurs de paramètres d'aéronef les plus précises, des capteurs d'aéronef source correspondants, et de la liste des capteurs d'aéronef source redondants disponibles à un ou plusieurs systèmes consommateurs (106) via le dispositif de communication (112).

15. Le procédé de la revendication 14, comprenant en outre :
la génération d'une table de seuils, la table de seuils contenant des valeurs de fonctionnement de seuil pour chacune des valeurs de paramètres d'aéronef en fonction du capteur d'aéronef source correspondant ; et
la fourniture en sortie de la table de seuils aux un ou plusieurs systèmes consommateurs (106) via le dispositif de communication (112).
